# EUROPÄISCHE PATENTANMELDUNG

(11) **EP 1 366 808 A2**
(43) Veröffentlichungstag der Anmeldung: **03.12.2003**
(21) Anmeldenummer: 03010433.5
(22) Anmeldetag: 09.05.2003
(51) Int. Cl.: B01J 19/32

(54) **Aus Elementen zusammengesetzte Struktur und Verfahren zu seiner Herstellung**

(30) Priorität: 29.05.2002 DE 10223796
(71) Anmelder: Technische Universität Clausthal, 38678 Clausthal-Zellerfeld (DE)
(72) Erfinder: Estrin, Juri, Prof. Dr., 38644 Goslar (DE); Müller, Norbert, Prof. Dr.-Ing., 38644 Goslar (DE); Trenke, Detlef, Dipl.-Ing., 38678 Clausthal-Zellerfeld (DE); Dyskin, Arcady, Associate Professor, Karrinyup, WA 6018 (AU); Pasternak, Elena, Dipl.-Math., Karrinyup, WA 6018 (AU)
(74) Vertreter: Gerstein, Hans Joachim

(57) **Zusammenfassung**

Die Erfindung betrifft eine aus Elementen zusammengesetzte Struktur, wobei die Elemente eine topologische Selbstverzahnung bilden. Zur Verbesserung derartiger Strukturen wird erfindungsgemäß vorgeschlagen eine selbsttragende Struktur aus hohlen, rohrförmigen Elementen (1), die parallelachsig unter Bildung einer Selbstverzahnung bindemittelfrei zu einer Verbundlage zusammengesetzt sind, in der die jeweils nur linienförmig lose aneinander anliegenden Elemente (1) durch einen die Elementenstruktur umschlingenden, durch seine Einspannkraft die Biegeelastizität der Struktur bestimmenden Rahmen (2) oder dergleichen zusammen gehalten sind, wobei jedes der Elemente (1) im Mittelquerschnitt einen kreisförmigen Querschnitt (3) aufweist, ausgehend von dessen Umfang die jeweils hälftigen Mantelflächen des Elementes (1) bogenförmig gekrümmt übergehen zu den beiden Element-Enden, deren Randkontur (4) jeweils die Form einer flachen, spitze Hauptscheitel (5) aufweisenden Ellipse hat, deren normal zur Element-Längsachse (6) liegende Hauptachsen (7, 8) um 90° gegeneinander um die Element-Längsachse (6) verdreht sind, wobei das Achsenverhältnis der beiden Ellipsenachsen (7, 8) in einem normal zur Element-Längsachse (6) liegenden Querschnitt von der Mitte des Elementes (1) zu dessen Enden jeweils kontinuierlich zunimmt.

## Beschreibung

Die Erfindung betrifft eine aus Elementen zusammengesetzte Struktur, wobei die Elemente eine topologische Selbstverzahnung bilden.

In dem Artikel "Toughening by Fragmentation - How Topology Helps" in Advanced Engineering Materials 2001, 3 Nr. 11, Seiten 885 - 888 sind die Grundlagen einer topologischen Selbstverzahnung beschrieben.

Der Erfindung liegt die Aufgabe zugrunde, derartige Strukturen zu entwickeln, die selbsttragend sind und aus identischen, ohne Verbindungselemente oder Bindemittel zusammengesetzten Elementen bestehen, die ein günstiges Oberflächen/Volumen-Verhältnis aufweisen. Ersetzt werden sollen in erster Linie mittels Fügetechnik zusammengesetzte Strukturen, die z.B. beim Einsatz in aggressiven Medien Schwachstellen und/oder unerwünschte Spannungskonzentrationen aufweisen.

Diese Aufgabe wird erfindungsgemäß gelöst durch eine selbsttragende Struktur aus hohlen, rohrförmigen Elementen, die parallelachsig unter Bildung einer Selbstverzahnung bindemittelfrei zu einer Verbundlage zusammengesetzt sind, in der die jeweils nur linienförmig lose aneinander anliegenden Elemente durch einen die Elementenstruktur umschlingenden, durch seine Einspannkraft die Biegeelastizität der Struktur bestimmenden Rahmen oder dergleichen zusammen gehalten sind, wobei jedes der Elemente im Mittelquerschnitt einen kreisförmigen Querschnitt aufweist, ausgehend von dessen Umfang die jeweils hälftigen Mantelflächen des Elementes bogenförmig gekrümmt übergehen zu den beiden Element-Enden, deren Randkontur jeweils die Form einer flachen, spitze Hauptscheitel aufweisenden Ellipse hat, deren normal zur Element-Längsachse liegende Hauptachsen um 90° gegeneinander um die Element-Längsachse verdreht sind, wobei das Achsenverhältnis der beiden Ellipsenachsen in einem normal zur Element-Längsachse liegenden Querschnitt von der Mitte des Elementes zu dessen Enden jeweils kontinuierlich zunimmt.

Der Erfindung liegt ferner die Aufgabe zugrunde, zur Herstellung der erfindungsgemäßen Strukturen ein geeignetes Verfahren anzuwenden.

Diese Aufgabe wird gelöst durch ein Verfahren, das erfindungsgemäß gekennzeichnet ist durch eine rechnerische Zerlegung der Struktur in mehrere Schichten, durch sukzessives Auftragen von Schichten aus Metall- oder Keramikpulverteilchen und durch anschließendes selektives Lasersintern.

Dieses Verfahren arbeitet nach dem Prinzip des Rapid Tooling, worunter man die Herstellung von Formen, insbesondere von Werkzeugen mit den Methoden des Rapid Prototyping versteht. Rapid Prototyping umfasst als Oberbegriff alle Herstellungsverfahren, die es ermöglichen, generativ Modelle aus 3D-CAD-Daten zu erzeugen. Im Unterschied zu konventionellen Verfahren, bei denen die Form durch Materialabtrag entsteht, wird dieses Ziel bei den meisten RP-Verfahren durch den schichtweisen Aufbau von Material erreicht. Dabei ist ein wesentliches Merkmal die direkte Umsetzung von 3D-CAD-Konstruktionen in stoffliche Modelle. Die Rapid Tooling Verfahrenskette setzt sich dabei aus folgenden Schritten zusammen:
- CAD-Konstruktion des Bauteils
- Aufbereitung der CAD-Daten für den Bauprozess
- Bauprozess
- gewünschte oder erforderliche Nachbearbeitungen.

Der fertige CAD-Datensatz muss nach der Konstruktion maschinengerecht aufbereitet werden. Gearbeitet wird dann vorzugsweise nach dem direkten Metall-Laser-Sinterverfahren, bei dem die Energie eines CO₂-Laser zunächst die gescannten Bereiche eines ebenen Metallpulverbetts (entsprechend den Schichtinformationen über das Bauteil) aufschmilzt. Die verflüssigten Pulverpartikel verbinden sich dadurch untereinander und erstarren zu einer festen Struktur.

Nach dem vorstehend beschriebenen Verfahren lässt sich eine gesamte selbsttragende Struktur gemäß der Erfindung gleichzeitig aus verschiedenen Materialien wie z.B. Metalle oder Keramiken herstellen, wobei die Dichte des Materials variiert werden kann. Es entfällt also die Notwendigkeit, die hohlen, rohrförmigen Elemente einzeln herzustellen.

Das Verfahren umfasst ganz allgemein die Herstellung sämtlicher Strukturen, die aus verzahnten Elementen besteht, wobei sowohl einzelne Elemente als auch auf einem Substrat angeordnete oder aus ihnen gewachsene Elemente verwendet werden können. Dies schließt das Verfahren ein, bei dem schichtweise solche Elemente aufgetragen und anschließend das Material konsolidiert wird, wobei eine rechnerische Zerlegung der zu erzeugenden, selbsttragenden Struktur erfolgt. Alternative Techniken zum Auftragen der Elemente bzw. des Materials, das aus entsprechenden Elementen besteht, wie z. B. Metall- oder Keramikpulverteilchen, sind sämtliche lithographischen Verfahren, das Aufbringen einer gasförmigen oder flüssigen Phase einschließlich einer physikalischen Beschichtung, beispielsweise durch Aufdampfen oder Aufstäubung sowie chemische Abscheidung aus der Dampfphase (chemical vapor deposition CVD), Laminierung mit Ätzen von geeigneten Mustern usw.

Beim Einsatz des vorstehend beschriebenen Verfahrens zur Herstellung einer erfindungsgemäßen selbsttragenden Struktur wird diese zuerst rechnerisch in mehrere Schichten zerlegt und dann durch sukzessives Auftragen von Schichten aus Pulverteilchen (z.B. Metall- oder Keramikpulver) und anschließendes Lasersintern Schicht für Schicht aufgebaut. Dabei ist von wesentlicher Bedeutung, dass Bestandteile einzelner Elemente in einer jeden Schicht nicht miteinander versintern, so dass jedes rohrförmige Element in der zusammengesetzten Struktur nicht mit seinen Nachbarn verbunden sondern lediglich durch die Einbindung in benachbarte Elemente geometrisch fixiert ist.

Bei der erfindungsgemäß aufgebauten selbsttragenden Struktur ist es aufgrund der topologischen Selbstverzahnung nicht möglich, ein einzelnes Element aus der Verbundlage herauszunehmen. Da dies nicht für die in einer Randreihe der Struktur angeordneten Elemente gelten würde, ist erfindungsgemäß der die Elementenstruktur umschlingende Rahmen vorgesehen.

Die einzelnen Elemente können unterschiedliche Wandstärken aufweisen, wobei eine dünnwandige Ausbildung zur Schaffung einer großen Oberfläche bei gerin ger Masse vorteilhaft ist. Im Übrigen können die Elemente eine beliebige Ausgestaltung ihrer inneren Oberfläche aufweisen.

Die erfindungsgemäßen Strukturen besitzen eine hohe Biegeflexibilität und sind durch ein großes Oberfiäche/Masse-Verhältnis gekennzeichnet. Mit Hilfe des vorstehend erläuterten Herstellungsverfahrens lässt sich zudem eine hohe Porosität der Elementwandungen gezielt einstellen, wodurch das Oberflächen/Masse-Verhältnis noch weiter gesteigert und bei Bedarf eine hohe Permeabilität erzielt werden. Bei letzterer Ausbildung können zumindest einige Elemente mit einem Wirkstoff befüllt sein.

Die Elemente können aus verschiedenen Materialien bestehen. Außerdem können einige Elemente doppelte Länge aufweisen und so zur Verankerung übereinander liegender Strukturen dienen.

In einer möglichen Ausführungsform kann der Rahmen starr ausgebildet sein und eine den vom Rahmen umspannten, die Elemente aufnehmenden Innenraum verkleinernde Spannvorrichtung aufweisen. Grundsätzlich ist es aber auch möglich, den Rahmen elastisch auszubilden, wobei seine Einspannkraft ausreichen muss, eine gewisse Biegeelastizität der selbsttragenden Struktur zu gewährleisten.

Mit Elementen unterschiedlicher Länge lassen sich auch gekrümmte Strukturen bilden.

Erfindungsgemäß ausgebildete Strukturen lassen sich insbesondere im Bau- und Maschinenbaubereich zur kontrollierten Schalldämpfung bzw. -isolierung einsetzen; diese Strukturen lassen sich aber auch bevorzugt für Katalysatoren, Filter, chemische Reaktoren oder strömungsbrechende Einrichtungen verwenden.

In der Zeichnung ist eine als Beispiel dienende Ausführungsform der Erfindung dargestellt. Es zeigen
- Figur 1: eine von einem starren Rahmen umspannte selbsttragende Struktur aus hohlen, rohrförmigen Elementen in Draufsicht;
- Figur 2: den Rahmen gemäß Figur 1 in isometrischer Darstellung;
- Figur 3: in isometrischer Darstellung die Struktur gemäß Figur 1;
- Figur 4: in einer Darstellung gemäß Figur 3 einen Mittelquerschnitt der Struktur gemäß Figur 3 und
- Figur 5: die Struktur gemäß Figur 3 in Draufsicht.

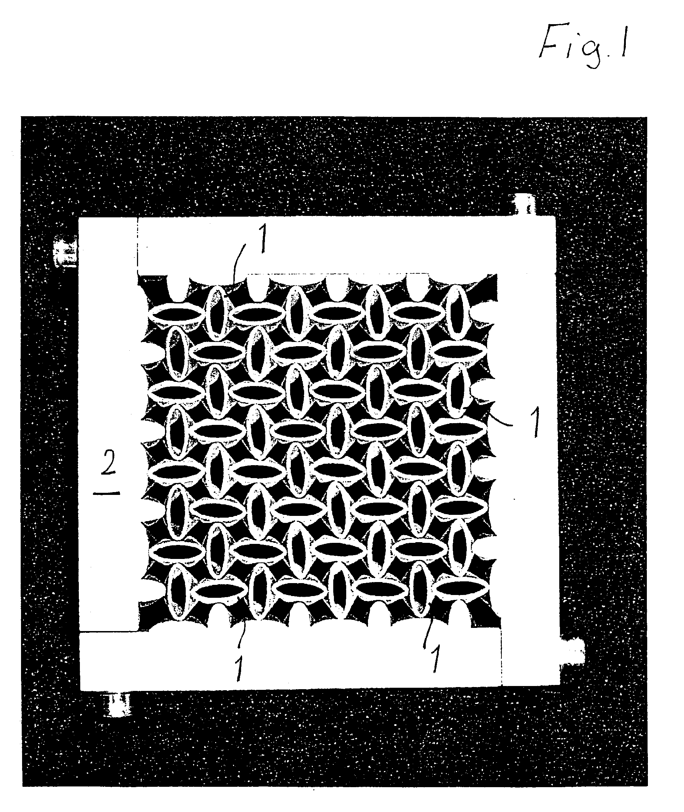

Figur 1 zeigt eine selbsttragende Struktur aus hohlen, rohrförmigen Elementen 1, die parallelachsig unter Bildung einer Selbstverzahnung bindemittelfrei zu einer Verbundlage zusammengesetzt sind, in der die jeweils nur linienförmig lose aneinander anliegenden Elemente 1 durch einen die Elementenstruktur umschlingenden, durch seine Einspannkraft die Biegeelastizität der Struktur bestimmenden Rahmen 2 zusammengehalten sind.

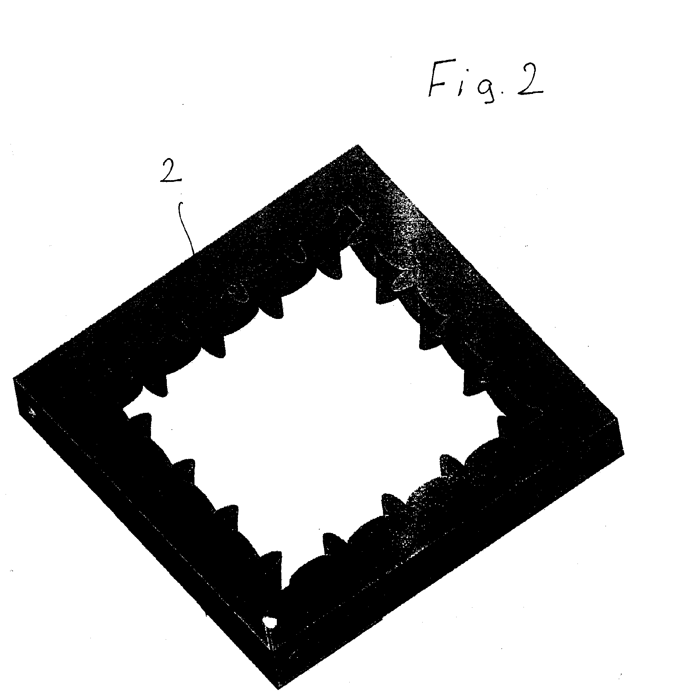

Figur 2 zeigt den Rahmen 2, dessen Innenkontur der Außenkontur der Randlagen der durch die Elemente 1 gebildeten Struktur angepasst ist.

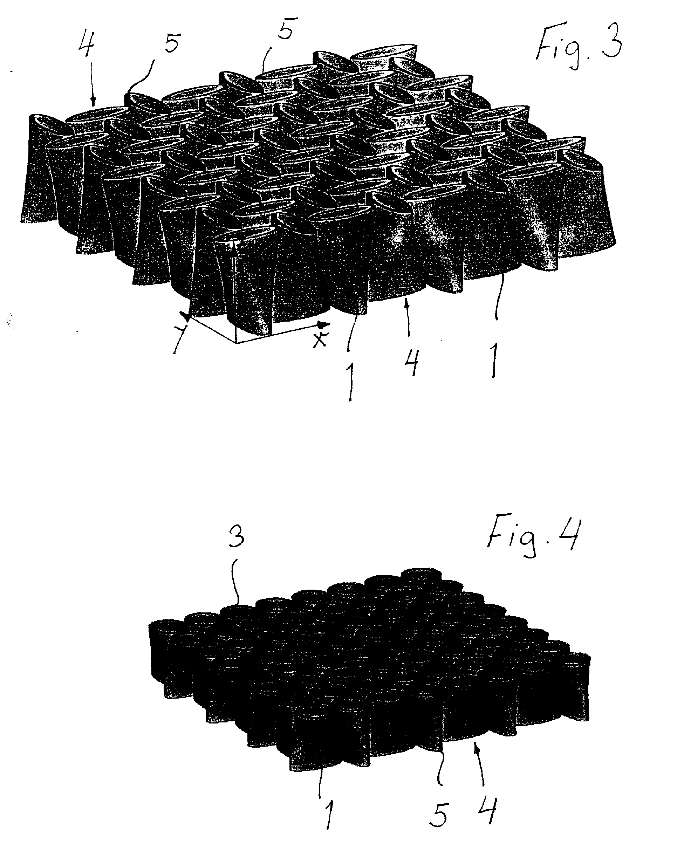

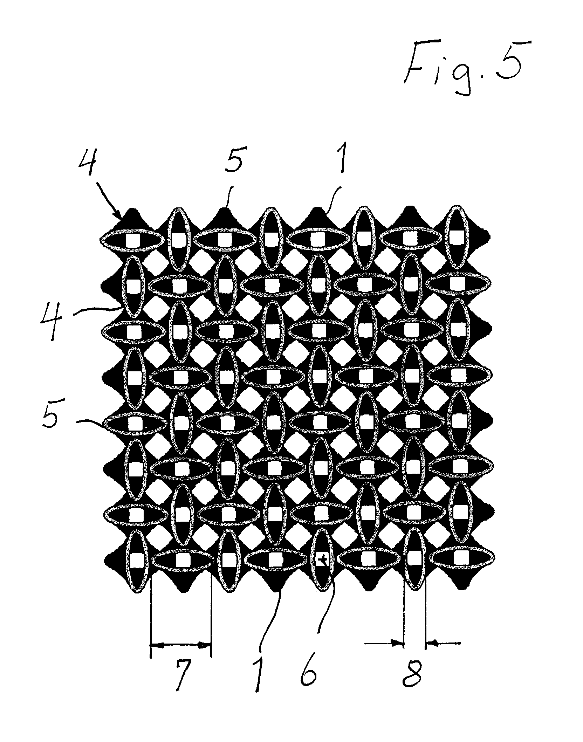

Die Figuren 3 - 5 lassen die Form der identisch ausgebildeten rohrförmigen Elemente 1 erkennen. Demnach weist jedes der Elemente 1 im Mittelquerschnitt einen kreisförmigen Querschnitt 3 auf (siehe Figur 4), ausgehend von dessen Umfang die jeweils hälftigen Mantelflächen des Elementes 1 bogenförmige gekrümmt übergehen zu den beiden Elementenden, deren Randkontur 4 jeweils die Form einer flachen, spitze Hauptscheitel 5 aufweisenden Ellipse hat, deren normal zur Element-Längsachse 6 liegende Hauptachsen 7, 8 um 90° gegeneinander um die Element-Längsachse 6 verdreht sind, wobei das Achsenverhältnis der beiden Ellipsenachsen 7, 8 in einem normal zur Element-Längsachse 6 liegenden Querschnitt von der Mittel des Elementes 1 zu dessen Enden jeweils kontinuierlich zunimmt.

## Patentansprüche

1. Selbsttragende Struktur aus hohlen, rohrförmigen Elementen (1), die parallelachsig unter Bildung einer Selbstverzahnung bindemittelfrei zu einer Verbundlage zusammengesetzt sind, in der die jeweils nur linienförmig lose aneinander anliegenden Elemente (1) durch einen die Elementenstruktur umschlingenden, durch seine Einspannkraft die Biegeelastizität der Struktur bestimmenden Rahmen (2) oder dergleichen zusammen gehalten sind, wobei jedes der Elemente (1) im Mittelquerschnitt einen kreisförmigen Querschnitt (3) aufweist, ausgehend von dessen Umfang die jeweils hälftigen Mantel-flächen des Elementes (1) bogenförmig gekrümmt übergehen zu den beiden Element-Enden, deren Randkontur (4) jeweils die Form einer flachen, spitze Hauptscheitel (5) aufweisenden Ellipse hat, deren normal zur Element-Längsachse (6) liegende Hauptachsen (7, 8) um 90° gegeneinander um die Element-Längsachse (6) verdreht sind, wobei das Achsenverhältnis der beiden Ellipsenachsen (7, 8) in einem normal zur Element-Längsachse (6) liegenden Querschnitt von der Mitte des Elementes (1) zu dessen Enden jeweils kontinuierlich zunimmt.

2. Selbsttragende Struktur nach Anspruch 1, **gekennzeichnet durch** unterschied-liche Wandstärken der einzelnen Elementen (1).

3. Selbsttragende Struktur nach Anspruch 1 oder 2, **gekennzeichnet durch** eine dünnwandige Ausbildung der Elemente (1) zur Schaffung einer großen Oberfläche bei geringer Masse.

4. Selbsttragende Struktur nach Anspruch 1, 2 oder 3, **dadurch gekennzeichnet, dass** die Elemente (1) aus verschiedenen Materialien bestehen.

5. Selbsttragende Struktur nach einem der vorhergehenden Ansprüche, **dadurch gekennzeichnet, dass** zumindest einige Elemente (1) mit einem Wirkstoff befüllt sind und aus einem Material hoher Permeabilität bestehen.

6. Selbsttragende Struktur nach einem der vorhergehenden Ansprüche, **gekennzeichnet durch** eine beliebige Ausgestaltung der inneren Oberfläche der Elemente (1).

7. Selbsttragende Struktur nach einem der vorhergehenden Ansprüche, **dadurch gekennzeichnet, dass** einige Elemente (1) doppelte Länge (I) aufweisen und zur Verankerung übereinander liegender Strukturen dienen.

8. Selbsttragende Struktur nach einem der vorhergehenden Ansprüche, **dadurch gekennzeichnet, dass** der Rahmen (2) starr ausgebildet ist und eine den vom Rahmen (2) umspannten, die Elemente (1) aufnehmenden Innenraum verklei-nernde Spannvorrichtung aufweist.

9. Selbsttragende Struktur nach einem der Ansprüche 1 bis 7, dadurch gekenn-zeichnet, dass der Rahmen elastisch ausgebildet ist.

10. Selbsttragende Struktur nach einem der vorhergehenden Ansprüche, gekenn-zeichnet durch Elemente (1) unterschiedlicher Länge (I) zur Bildung gekrümm-ter Strukturen.

11. Verfahren zur Herstellung einer selbsttragenden Struktur nach einem der vorhergehenden Ansprüche, **gekennzeichnet durch** eine rechnerische Zerlegung der Struktur in mehrere Schichten, **durch** sukzessives Auftragen von Schichten aus Metall- oder Keramikpulverteilchen und **durch** anschließendes selektives Lasersintern.

12. Verwendung einer selbsttragenden Struktur nach einem der Ansprüche 1 bis 10 im Bau- und Maschinenbaubereich zur kontrollierten Schalldämpfung bzw. -isolierung.

13. Verwendung einer selbsttragenden Struktur nach einem der Ansprüche 1 bis 10 für Katalysatoren, Filter, chemische Reaktoren oder strömungsbrechende Einrichtungen.
